# EUROPEAN PATENT SPECIFICATION

(11) **EP 3 865 820 B1**
(45) Date of publication and mention of the grant of the patent: **22.04.2026**
(21) Application number: 20209671.5
(22) Date of filing: 25.11.2020
(51) Int. Cl.: G01C 21/20

(54) **METHOD AND SYSTEM FOR CAMERA ASSISTED MAP AND NAVIGATION**
VERFAHREN UND SYSTEM FÜR KAMERAGESTÜTZTE KARTE UND NAVIGATION
PROCÉDÉ ET SYSTÈME DE NAVIGATION ASSISTÉE PAR CAMÉRA

(30) Priority: 14.02.2020 FR 2001465
(43) Date of publication of application: 18.08.2021
(73) Proprietor: Amadeus S.A.S., 06410 Biot (FR)
(72) Inventor: PARIDA, Swagat, 06410 Biot - Sophia Antipolis (FR); SASIDHARAN, Renjith Karimattathil, 06410 Biot - Sophia Antipolis (FR); RUDRESH, Ruthwik, 06410 Biot - Sophia Antipolis (FR)
(74) Representative: Samson & Partner Patentanwälte mbB

(56) References cited:
- LINHUI XIAO ET AL: "Dynamic-SLAM: Semantic monocular visual localization and mapping based on deep learning in dynamic environment", ROBOTICS AND AUTONOMOUS SYSTEMS, vol. 117, 2 April 2019 (2019-04-02), AMSTERDAM, NL, pages 1 - 16, XP055738514, ISSN: 0921-8890, DOI: 10.1016/j.robot.2019.03.012

## Description

### FIELD

The subject disclosure relates generally to a camera assisted map and navigation, and specifically to a method and system for use in navigating in a facility.

### BACKGROUND

Usually, people find it difficult to navigate inside a facility and therefore need special assistance. For example, travelers need help of maps, sign boards, customer care, other fellow travelers, indoor maps etc. Current infrastructure and known systems have not addressed these problems yet.

Known systems for indoor guidance use a combination of the Global Positioning System (GPS) and other technologies such as Bluetooth, Infrared, Wi-Fi, RFID, etc. to provide detailed and accurate location information to users. For example, a representative of this category of systems is disclosed in US 9 539 164 B2. However, such systems are impracticable due to the need of additional hardware to provide location information. Moreover, GPS services are not accessible in facilities because it is satellite-based and line-of-sights to satellites is required for the GPS service.

The subject disclosure addresses these drawbacks and proposes a method and system for use in navigating in a facility which does not require the use of additional hardware, and which does also not depend on the accessibility of GPS services.

LINHUI XIAO et al., "Dynamic-SLAM: Semantic monocular visual localization and mapping based on deep learning in dynamic environment", ROBOTICS AND AUTONOMOUS SYSTEMS, AMSTERDAM, NL, vol. 117, pertains to a semantic simultaneous localization and mapping (SLAM) framework to solve the problem of SLAM in dynamic environment. The SLAM framework comprises constructing, based on a convolutional neural network, an SSD object detector to detect dynamic objects at semantic level, performing a missed detection compensation algorithm based on speed invariance in adjacent frames, and constructing a feature-based visual SLAM system to process the feature points of dynamic objects through a selective tracking algorithm.

### SUMMARY

The present invention is defined in the independent claims. The dependent claims define embodiments thereof.

### BRIEF DESCRIPTION OF THE DRAWINGS

The accompanying drawings illustrate various examples of the subject disclosure and, together with the general description given above, and the detailed description of the examples given below, serve to explain the examples of the subject disclosure. In the drawings, like reference numerals are used to indicate like parts in the various views.
FIG. 1 depicts an overview illustrating general components of a computing system for use in navigating in a facility.
FIG. 2 depicts an exemplary system incorporating the computing system of FIG. 1.
FIG. 3 depicts a method for use in navigating in a facility according to one example.
FIG. 4A depicts an example for estimating the current location of the camera according to block 330 of the method of FIG. 3.
FIG. 4B depicts an example for generating the virtual path according to block 340 of the method of FIG. 3.
FIG. 4C depicts an example for generating the model data according to block 310 of the method of FIG. 3.
FIG. 5 depicts an example for dividing the image into one or more image blocks.
FIG. 6A depicts an exemplary image received from the camera at block 320 of the method of FIG. 3.
FIG. 6B depicts the exemplary image of FIG. 6A divided into image blocks.
FIG. 6C depicts image blocks of the exemplary image of FIG. 6A with detected object candidates.
FIG. 6D depicts detection of distance values to the object candidates in the image blocks of the exemplary image of FIG. 6A.
FIG. 6E depicts classification of the object candidates in the image blocks of the exemplary image of FIG. 6A.
FIG. 6F depicts deriving a relation between the object in the image blocks of the exemplary image of FIG. 6A.
FIG. 6G depicts the exemplary image of FIG. 6A with image blocks marked as suitable for a path.
FIG. 6H depicts the exemplary image of FIG. 6A with image blocks marked as virtual path.
FIG. 7A depicts a first example of determining a relation between a detected object and the destination object.
FIG. 7B depicts a second example of determining a relation between a detected object and the destination object.
FIG. 8 is a diagrammatic representation of a computer system which provides the functionality of the computing system for use in navigating in a facility as shown in FIG 2.

### DETAILED DESCRIPTION

Before turning to the detailed description of examples, some more general aspects on involved techniques will be explained first.

The subject disclosure generally pertains to navigating in a facility. The term "navigate" has its common meaning and is especially understood in the determination of position and direction to a destination. The term "facility" includes all types of buildings and structures. Examples of facilities include airport buildings with one or more floors (e.g., check-in areas and terminal buildings), hospitals, shopping malls, etc. The subject disclosure more specifically concerns navigating inside a facility from a position in the facility to another position in the facility (i.e., indoor). the subject disclosure, elements, components and objects within the facility are commonly referred to as objects of the facility. Examples of objects include walls, pillars, doors, seats, sign boards, desks, kiosks, etc.

The subject disclosure uses machine learning (ML) techniques and applies algorithms and statistical models that computer systems use to perform special tasks without using explicit instructions, replying mainly on patterns and inference instead. Machine learning algorithms build a mathematical model based on sample data, known as "training data", in order to make predictions or decisions without being explicitly programmed to perform the task. The subject disclosure uses, as its data basis, a mathematical model referred to as model data of the facility herein. The model data is based on a plurality of images from the facility.

As will be described, the subject disclosure uses techniques of object detection and object classification to detect instances of semantic objects of a certain class such as humans, buildings, cars, etc. in digital images and videos. Every object class has its own special features that helps in classifying the class. The techniques for object detection and object classification are e.g. ML-based or deep learning-based. Known ML-based approaches include histogram of oriented gradients (HOG) features. The object detection also includes feature extraction to extract the features from the digital images and feature recognition to recognize the extracted features to be features that helps in classifying.

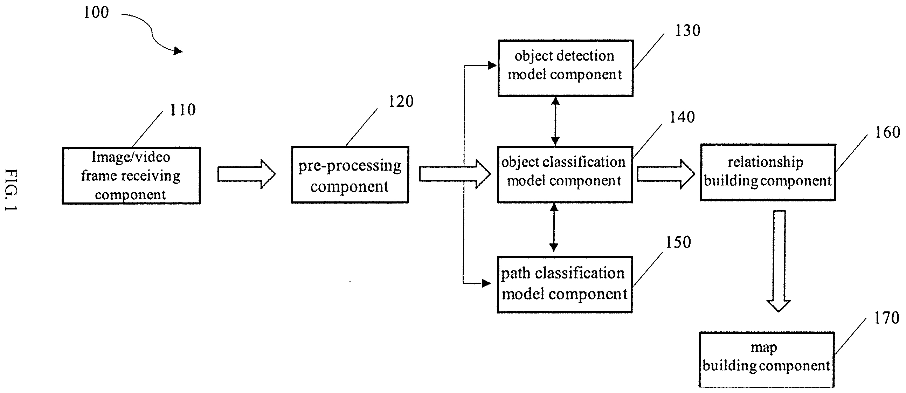

FIG. 1 depicts an overview illustrating general components of a computing system 100 for use in navigating in a facility. The system 100 comprises a component 110 implementing a function to receive at least one image from a camera. The component 110 may also receive a plurality of images in sequence or a plurality of frames of a video. The received images/frames are pre-processed by component 120 implementing one or more pre-processing functions such as creating a grid and dividing the image into image blocks, and augmentations including filters and perspectives. The images are then further processed using ML techniques by a collection of several components interacting with each other. The collection comprises a component 130 for implementing a function of an object detection model, a component 140 for implementing a function of an object classification model, and a component 150 for implementing a function of a path classification model. The component 130 detects candidates for objects in the images (i.e., the components detects regions of interest in the images). The component 140 classifies the candidates for objects and thereby recognizes objects in the images. The component 150 identifies regions in the images suitable for a path (e.g., the floor of a facility is suitable, whereas ceilings, walls or obstacles are not). Based on the detected candidates or objects, a component 160 for implementing a function of building a relationship derives relations between them. The relations defining a path to navigate from a current location to a destination location in the facility. The component 160 takes into account the output of the component 150 and thus regions not suitable for the path. A component 170 for implementing a function of building a map uses the relationship built by the component 160 and generates a virtual path along which e.g. a user can move from the current location to the destination location. The component 170 also generates navigation information according to the virtual path. The navigation information is provided and displayed together with the image to the user. Accordingly, the subject disclosure provides a camera-assisted map and navigation system, not requiring additional hardware as in US 9 539 164 B2.

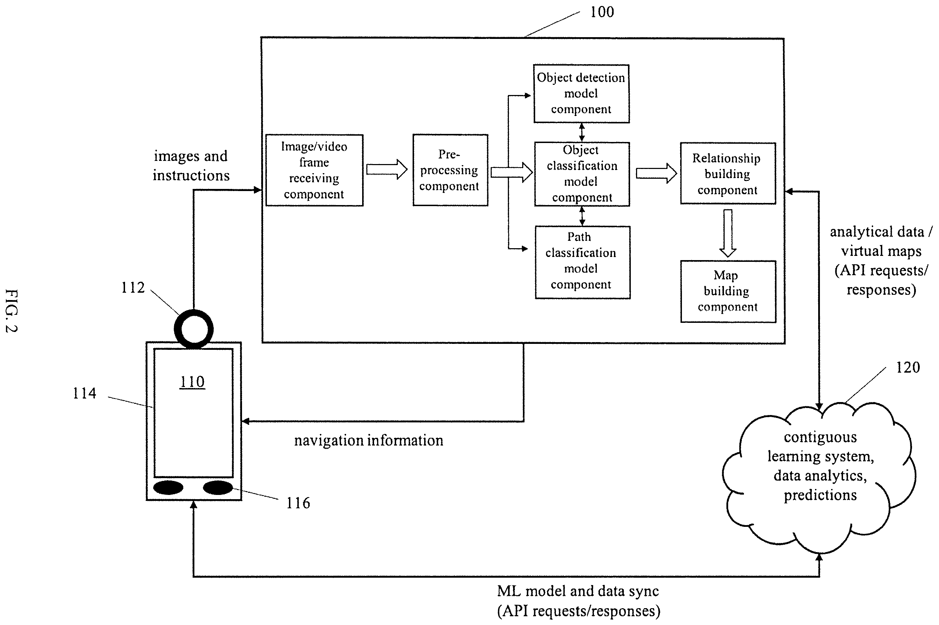

FIG. 2 depicts an exemplary system incorporating the computing system of FIG. 1. The computing system 100 corresponds to the system shown in FIG. 1. That is, the computing system 100 may comprises a processor and at least one memory device accessible by the processor. The memory device contains a body of program instructions which, when executed by the processor, cause the computing system to implement a method comprising: receiving at least one image; estimating a current location of the camera in the facility based on the at least one image and model data of the facility; generating a virtual path from the current location of the camera to a destination location in the facility using the model data of the facility; and generating and outputting navigation information to the destination location according to the virtual path. The computing system 100 may communicate, via any suitable communication connection, with a computing device 110 such as a mobile device. The computing device 110 may comprise a camera device 112, a display device 114 and an input device 116. The camera device 112 acquire the at least one image and the computing device 110 transmits the at least one image to the computing system 110. The computing device 110 receives navigation information from the computing system 110 and displays the same on the display device 114, for example, together with the at least one image acquired. The information about the destination location is input via the input device 116 and the computing device 110 transmits the information about the destination information to the computing system 100. The computing system 100 and the computing device 110 may communicate with a backend system 120, e.g., API requests/responses. The backend system 120 may be a contiguous learning system and/or a system for data analytics and predictions. For example, the backend system 120 generates and updates the model data.

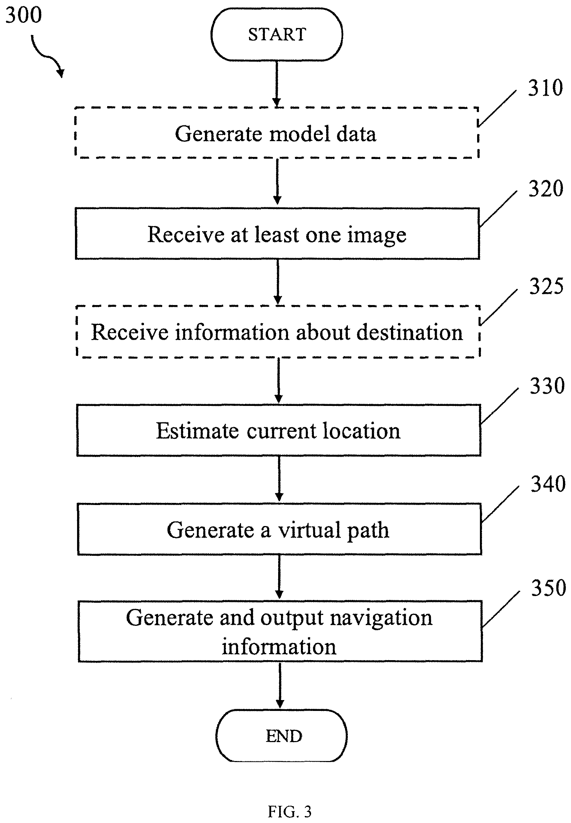

Now turning to FIG. 3, an exemplary method for use in navigating in a facility will be described. It is noted that not all blocks illustrated in FIG. 3 are necessary for performing the exemplary method. At least the blocks having broken lines are optional and/or may be performed only once.

The method illustrated in FIG. 3 may be performed by one or more computing devices such as a personal computer, server, mobile device such as PDA, smartphone, mobile phone, tablet, among other. In an example, a computing system as described herein may be used to perform the method of FIG. 3, the computing system comprising a processor and at least one memory device accessible by the processor. The memory device contains a body of program instructions which, when executed by the processor, cause the computing system to implement the method of FIG. 3. Also, the computing system may comprise a camera, or the camera may be coupled to the computing system. The computing system may also be coupled to computing device and the camera is connected to or incorporated in the computing device.

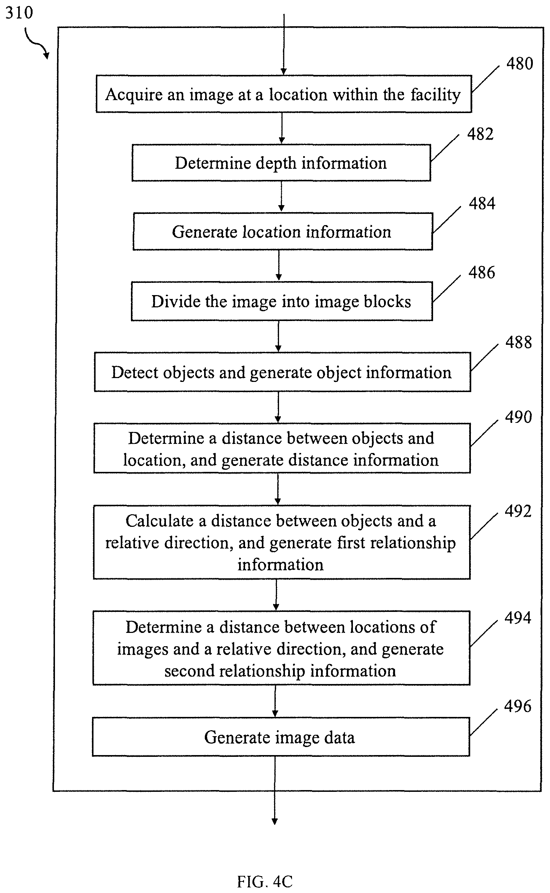

The method 300 starts at block 310 with generating the model data of the facility. Generating the model data will be described in more detail below with reference to FIG. 4C. As explained above, the model data forms the data basis for the method of FIG. 3. The model data may be stored in the memory device of the computing system and is thereby accessible by the processor.

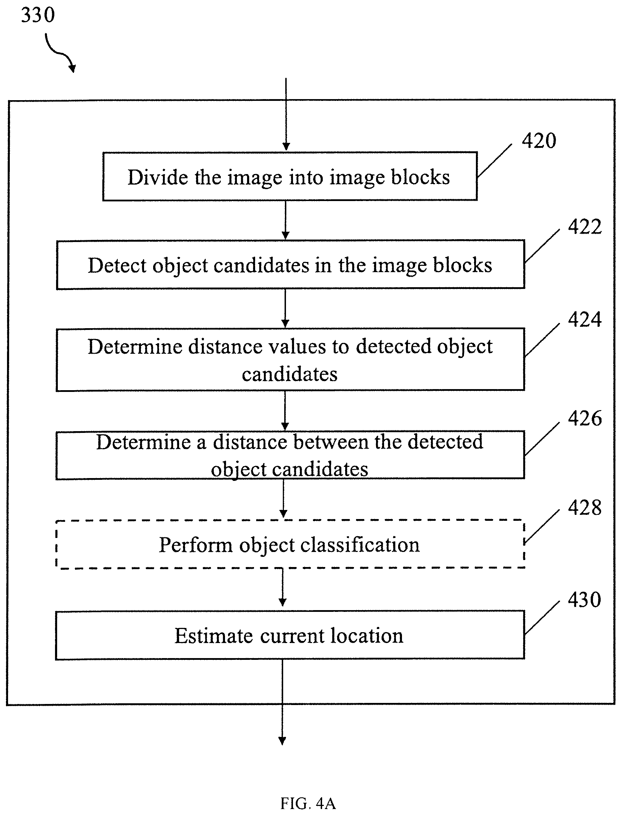

In an example, as a result of block 310, the model data of the facility comprises image data of a plurality of images. As will be described with reference to FIG. 4C, a plurality of images will be acquired by the camera from within the facility and used as sample or training data. The plurality of images is processed so as to generate a model of the facility which the ML techniques use to make predictions or decisions. In particular, the model comprises data concerning objects of the facility, allowing the ML techniques to predict and decided that a structure in an image corresponds to a particular object of the facility. In the example, the image data of each image used as sample or training data comprises location information corresponding to a location in the facility from which the image was acquired, object information corresponding to an object of the facility in the image, distance information corresponding to a distance between the object and the location, first relationship information specifying a distance and a relative direction to navigate from one object to another object of the image, and second relationship information specifying a distance and a relative direction to navigate from the location from which the image was acquired to a location from which another image was acquired. Herein, the first relationship information may also be referred to as a first relationship, and the second relationship information as a second relationship.

At block 320, at least one image (also referred to as tile) is received from the camera. In one specific example, the at least one image may also be represented by frames of a video stream acquired by a video camera. At a location within the facility, the camera is used to acquire at least one image from the surrounding at the location (i.e., a physical space in one direction from the location). The image may be transmitted in any suitable form, e.g., via the coupling, by the camera to the computing system which receives the image. Alternatively, the image may be stored in any suitable form at a memory coupled to the camera and retrieved by the computing system.

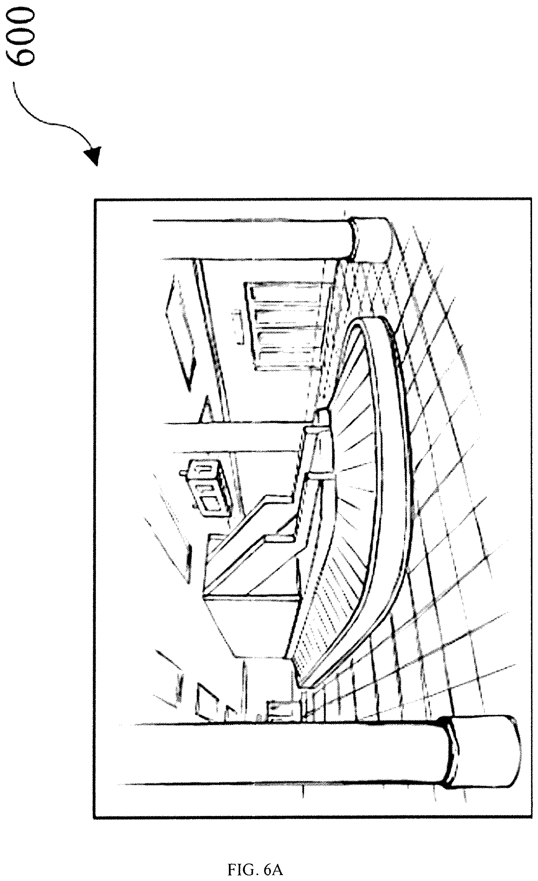

An example of an image 600 received from the camera is depicted in FIG. 6A. In this example (also referred to as airport example hereinbelow), the facility is an airport, in particular an arrival hall. As illustrated, the arrival hall comprises several objects such as pillars, a baggage carousel, a window, a floor, a ceiling with lightings, a door, and a sign board with number "1" suspended from the ceiling, among other. These objects are also represented (included) in the image.

Optionally, at block 325, information about a destination object in the facility to which the camera is to be navigated is received. At block 325, the destination location is estimated.

In one example, the operation of block 325 involves receiving, via an input device, information about a destination object (e.g., a name of the destination object). The information may be input in any suitable form, including text input, speech input, etc. The information about the destination object is used to search for an image or image block of an image including object information corresponding to the destination object. For example, in case the object information includes the name of the object, the model data can be searched using the name of the destination object as search key. If found, a location from which the images including the destination object is estimated based on the image data of the images.

At block 330, a current location of the camera in the facility is estimated. The estimating is performed based on the image and the model data of the facility. For navigating in the facility, the current location of the camera represents the starting point of the path to navigate along to the destination point. In block 330, the location where the image was required, i.e., where the camera was placed when acquiring the image, is estimated and used as the current location. Also, the orientation of the camera may be estimated (i.e., the direction such as North, East, South, West, etc., into which the camera was pointing when acquiring the image) with the estimated location as the base or reference point.

According to an example, the estimating in block 330 of the method of FIG. 3 is performed as illustrated in FIG. 4A.

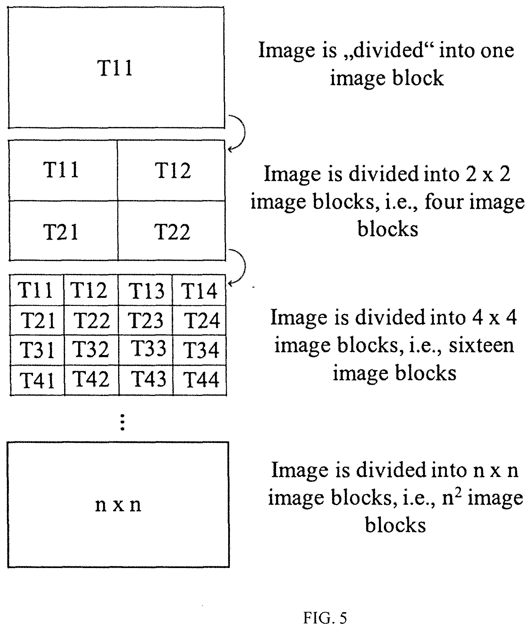

First, at block 420, the image is divided into one or more image blocks. The image blocks are non-overlapping and contiguous (directly adjacent to each other). An example of dividing the image is exemplified in FIG. 5. As exemplified, the image may be divided into n x n (n being an integer number) of image blocks, all having the same size. Also, the image may be divided into n x m (n, m being integer numbers) of image blocks and the image blocks may also have different sizes. Dividing may also be performed in an adaptive and/or dynamic fashion, depending on the image characteristics. For example, if regions of the image are blurred while others are not, the sizes of the image blocks for the blurred regions may be made greater than the sizes of the image blocks for other unblurred regions. Also, in one example, the image may, in a first step, be taken as it is (i.e., "divided" into one image block only). Based on results of the further processing of the image block, as will be described in detail hereinbelow, it may be decided to further divide the image into e.g. 2 x 2 image blocks in a next step, and so on. Also, if necessary, adjacent image blocks may be combined to form a single image block including an object of the facility and not only a part thereof. In a similar manner, an image block may also be divided into a plurality of image sub-blocks.

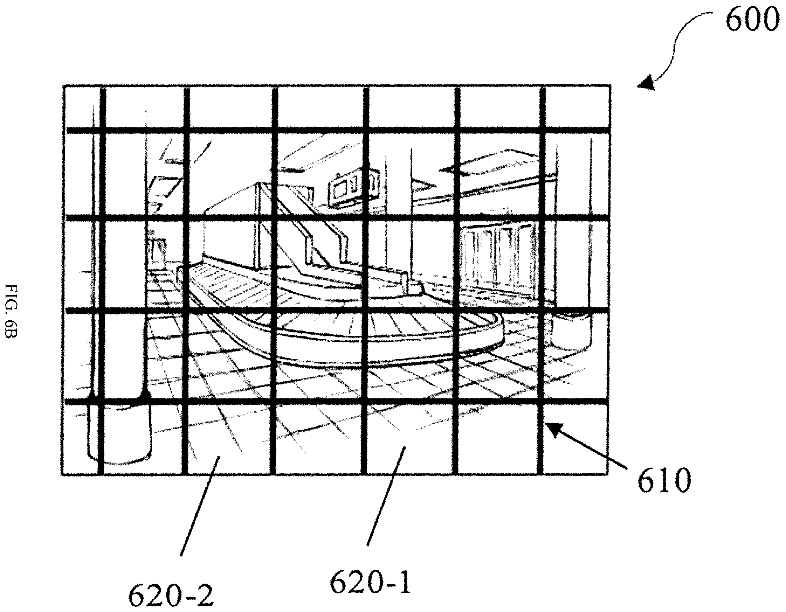

In FIG. 6B, dividing the image 600 of the airport example into a plurality of image blocks is shown. A grid 610 is applied to the image 600, dividing the image 600 into the image blocks, e.g., image block 620-1 and image block 620-2.

Then, at block 422, object candidates corresponding to objects of the facility are detected in the one or more image blocks. In one example, the detecting of object candidates is performed for each of the image blocks separately and can thus be performed in parallel. This process is also referred to as object detection using the object detection model as described above to detect regions of interest in the image block. For example, features may be extracted from the image block and compared with information of features in the object information, i.e., features extracted from objects of the facility.

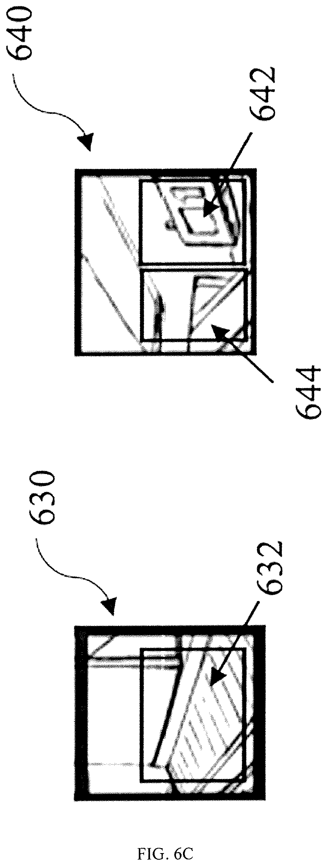

In Fig. 6C, two image blocks 630 and 640 of the image 600 of the airport example are shown. Objection detection as described has been performed on each of the two image blocks 630 and 640. Thereby, a first region 632 in image block 630 has been identified as having features (e.g., a histogram value) which correspond to features of an object of the facility (e.g., a baggage carousel). The first region 632 represents an object candidate in the image block 630. Similarly, a first region 642 and a second region 644 have been identified as object candidates in image block 640. The first region 642 has features corresponding to features of objects of the facility (e.g., a baggage carousel or an escalator or a banister), while the second region 644 has features corresponding to features of an object of the facility (e.g., a sign board suspended from the ceiling). In particular, it may be detected that the second region 644 includes features corresponding to a number "1", thereby limiting the object candidates to sign boards suspended from the ceiling with number "1".

At block 424, distance values to the object candidates detected in block 422 are determined. As described above, the model data comprises the object information corresponding to an object of the facility and the distance information specifying a distance between the object and a location of the camera which acquired an image with the object. From the model data, the object information of each object being a detected objected candidate, the corresponding distance information is obtained from the model data. Based on characteristics of the object candidate (e.g., the width in number of pixels) and the object in the model data, the distance value may be determined based on the distance information for the object. This determining may include triangulation or ML techniques, as it will be understood by the skilled person.

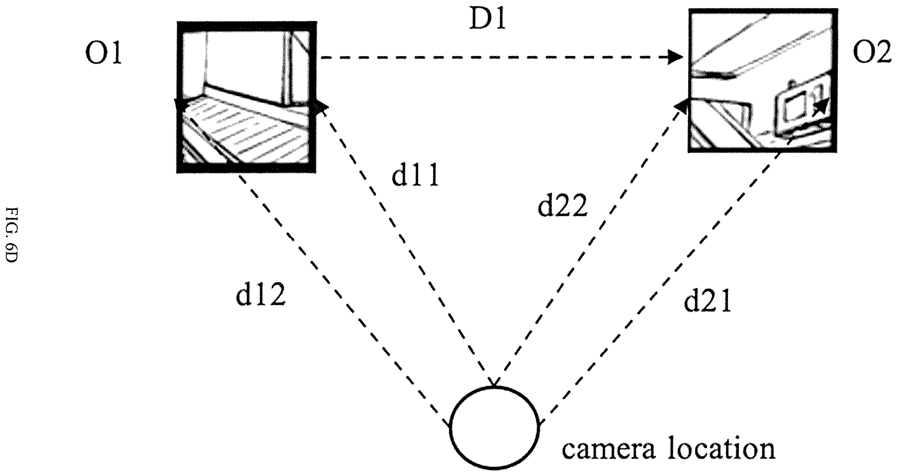

In FIG. 6D, an example for determining distance values to the object candidate 632 in image block 630 (designated O1) and the object candidates 642, 644 in image block 640 (designated O2) shown in FIG. 6C is illustrated. From the model data, distance information related to object O1 are retrieved from the model data. As described, the distance information specifies a distance from the object to the location from which the sample or training image with the object was taken. This distance is used to estimate and thereby determine the distance values d11 and d12 from a presumed camera location (designated camera location in FIG. 6D) to the object O1. Also, the distance values d21 and d22 are determined for object O2 in a similar way.

Moreover, at block 426, a distance between the object candidates detected in block 422 are determined based on the distance values determined in block 424. Again, as it will be understood by the skilled person, triangulation or ML techniques may be applied.

In the example of FIG. 6D, the distance D1 between the object candidates O1 and O2 (i.e., image blocks 630 and 640) is determined based on one or more of the distance values d11, d12, d21 and d22.

Finally, at block 430, the current location of the camera is estimated based on the location information from the model data and the distance values determined in block 426. As described, the location information specifying a location in the facility where the camera was placed when acquiring a sample or training image from which the image data and the object information of objects in the sample or training image were generated. For example, the location may be assumed as a reference location to which the distance information to the objects correspond. Based thereon, relative locations of the objects may be determined. From the relative locations of the objects, the location of the camera can be derived using the determined distance values (e.g., at the intersection point of the distance values d11 and d12 from the relative location of O1 and the distance values d21 and d22 from the relative location of O2). As it will be understood by the skilled person, other techniques including triangulation or ML techniques may be used.

Optionally, in one example, the estimating in block 330 of the method of FIG. 3 may further comprise performing object classification with respect to the object candidates at block 428 (e.g., using the object classification model as described herein). The object classification is to classify and recognize the object candidates as objects of the facility. In this example, the object classification may be based on the distance values determined in block 424 and the distance determined in block 426. As described above, the model data comprises the distance information specifying the distance between an object and a location, and the first relationship information specifying the distance between two objects of the facility. Based on the distance between them and the distances to a location, a score indicating the likelihood that the object candidates correspond to particular objects in the facility. Also, a likelihood that an object candidate corresponds to a particular object in the facility may be derived from the object information (e.g., using the features of the object).

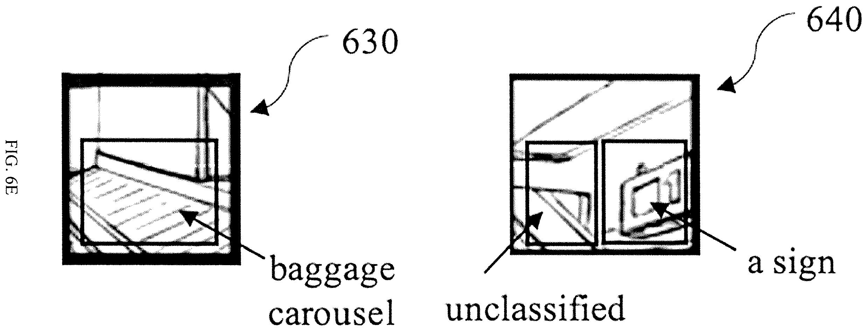

FIG. 6E depicts a result of performing the object classification of block 428 with respect to the object candidates 632, 642 and 644 in the image blocks 630 and 640, as shown in FIG. 6C. As illustrated, the object candidate 632 in the image block 630 is classified as baggage carousel, e.g., based on features such as histogram, color, location, texture, etc. Similarly, the object candidate 642 in the image block 640 is classified as sign board suspended from the ceiling, e.g., based on feature such as the number "1". The object candidate 644 in the image block 640 is not classified (i.e., unclassified) as it may correspond with similar likelihood to different objects such as baggage carousel or escalator. The object candidate 644 may therefore be ignored in the further processing of the image block.

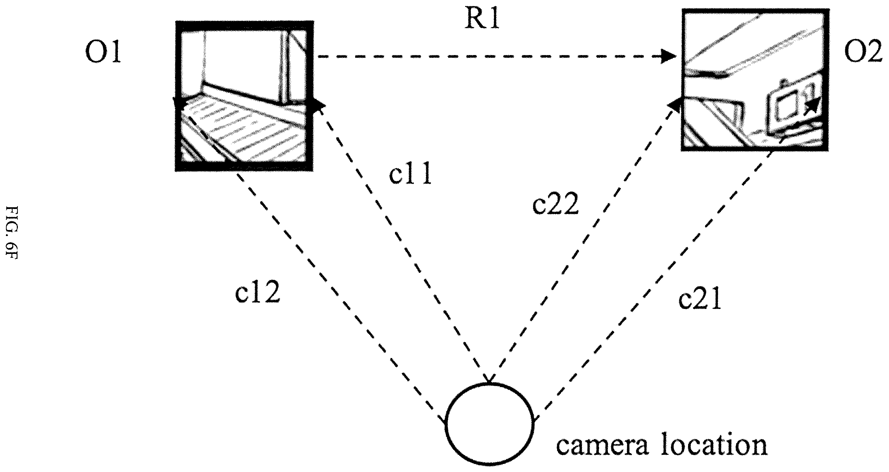

The classified objects may be used to derive distance values and a relation between the classified objects. FIG. 6F illustrates a relation R1 between the classified objects O1 and O2 derived e.g. using the first relationship information from the model data. In addition, distance values determined at block 422 with respect to the object candidates may be adapted or corrected with respect to the classified objects. For example, the distance values d11, d12, d21 and d22 of FIG. 6D may be replaced by the distance values c11, c12, c21 and c22, respectively. The determination of the distance values c11, c12, c21 and c22 is performed in a manner similar to block 422 as described above.

Turning back to FIG. 3, a virtual path from the current location of the camera estimated in block 330 to a destination location in the facility is generated at block 340. The virtual path along which to navigate from the current location to the destination location may be generated using the model data of the facility. For example, as described above, objects of the facility are determined in the image taken from the current location. From the model data, relations specifying distances and directions between the objects can be derived. The virtual path therefore corresponds to a sequence of relations from a first object at the current location to an object in the vicinity of the destination location. In other words, the virtual path may be understood as a sequence of steps to move the camera by a given distance in a given direction (e.g., move the camera 50 meters to the North and then 30 meters to the East to arrive at the destination location).

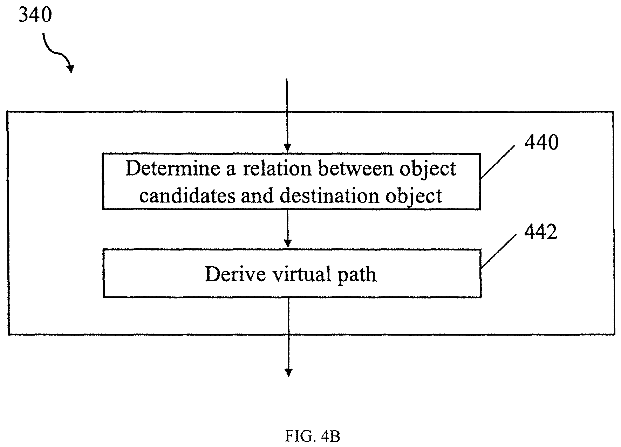

According to an example, the generating in block 340 of the method of FIG. 3 is performed as illustrated in FIG. 4B.

First, at block 440, a relation between the object candidates and the destination object is determined. The destination object may be estimated in accordance with an instruction or information at block 325, as will be described below in more detail. The relation is determined based on the first and/or second relationship information from the model data. Based on the relations, distances and relative directions from one image block to another image block and from one image to another image is determined. In case of multiple relations, a score is determined and only the relation having the strongest score is used.

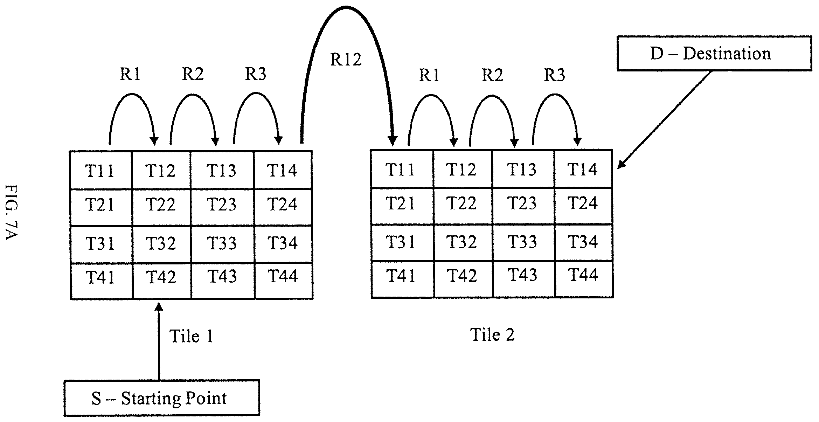

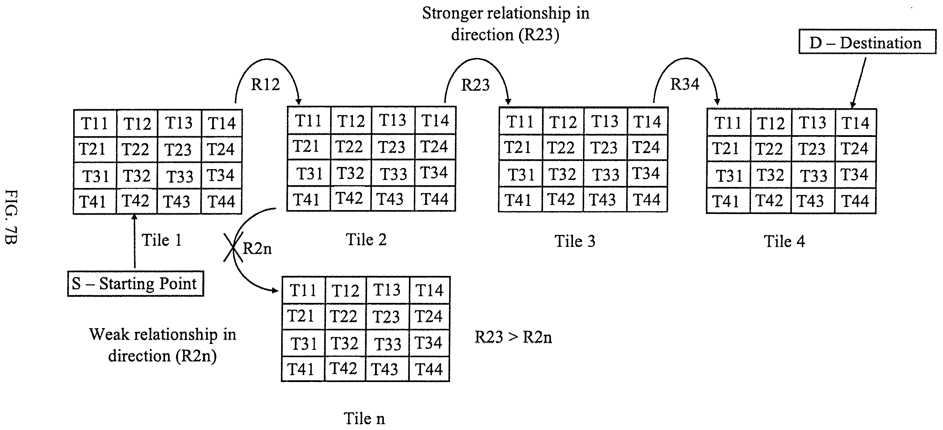

Examples for determining the relation according to block 442 are depicted in FIGS. 7A and 7B.

The example of FIG. 7A illustrates the relation from an object in image block T42 (designated starting point S and corresponding to the current location) in tile 1 (image 1) to an object in image block T14 (designated destination point D and corresponding to the destination location) in tile 2 (image 2). Based on the second relationship information, it is to be navigated from image block T42 of tile 1 in accordance with relation R12 to arrive at image block T42 of tile 2 (the relative direction which may be normalized is to the East). The distance from tile 1 to tile 2 is derived from the second relationship information. Then, based on the first relationship information, it is to be navigated e.g. to the North from image block T42 of tile 2 to image block T12 of tile 2 and to the East from image block T12 of tile 2 to image block 14 of tile 2 (i.e., along relations R2 and R3). As it will be understood by the skilled person, the illustration of FIG. 7A represents an example only. In any case, the directions are to the North (i.e., towards the top in an image), East (i.e., towards the right in the image), South (i.e., towards the bottom of the image) or to the West (i.e., towards the left of the image).

The example of FIG. 7B also illustrates the relation from a starting point S in in image block T42 in tile 1 to a destination point D in image block T14 of tile 4 (image 2). In the example of FIG. 7B, it is determined based on the second relationship information of tile 2 that it may be navigated to tile 3 (i.e., relation R23) or to tile n (i.e., relation R2n). In order to decide which relation to follow, it is determined which relationship is stronger. For example, scores based on the distances according to the second relationship information are calculated (e.g., the shorter the distance the higher the score) and higher scores are determined as being stronger. In the example of FIG. 7B, the score of relation R23 is higher than the score of relation R2n (e.g., the distance in relation R23 is shorter), indicating that the relationship in the direction toward tile 3 is stronger. As it will be understood by the skilled person, the illustration of FIG. 7B represents an example only.

At block 442 of FIG. 4B, the virtual path is derived. The virtual path is derived based on the relation derived in block 440.

In one example of generating the virtual path in block 340 of the method of FIG. 3, path classification is performed (e.g., using the path classification model). The operation of the path classification means determining which image blocks of the images represent a suitable path, that is, can be used for navigating to the destination location/destination object. As it will be understood by the skilled person, path classification may be formed using ML techniques based on corresponding features (i.e., tiles on the floor, color of the floor, navigation lines or signs on the floor, etc.). For example, image blocks that correspond to floor objects of the facility are determined.

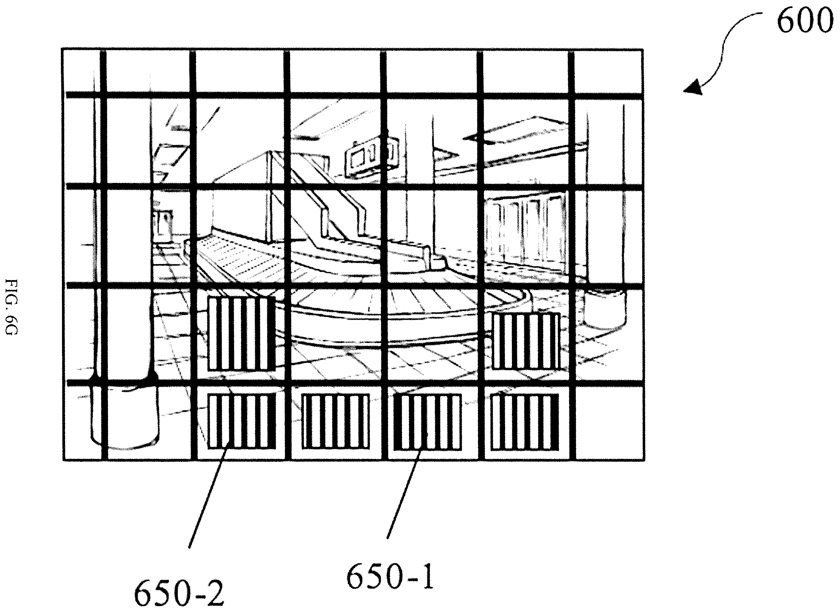

An example of path classification with respect to image 600 of FIG. 6A is depicted in FIG. 6G. In this non-limiting example, image blocks 650-1 and 650-2 are detected and classified as being floor objects and therefore suitable image blocks for deriving the path. Other image blocks such as the image block left of image block 650-2 is not suitable because it includes an object different to a floor object which may be decided as being an obstacle.

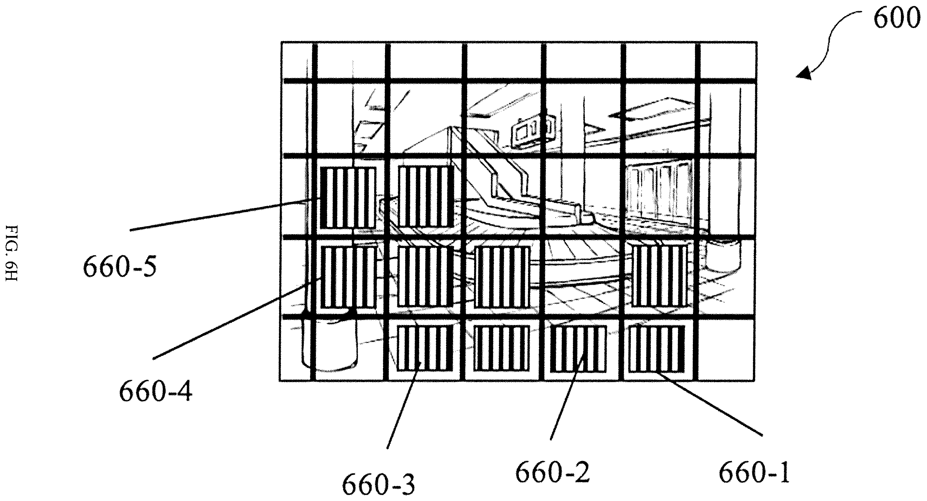

In FIG. 6H, the exemplary image 600 of FIG. 6A with image blocks marked as the virtual path derived in block 442 is depicted. For example, image blocks 660-1 to 660-5 are image blocks of the virtual path. Scores (not shown), as described above with respect to the relations, may be associated with the image blocks. For example, the scores associated with image blocks 660-3 to 660-5 may have a value of "99", while the score of image block 660-2 has a value of "50" and the score of image block 660-1 has a value of "0". In deciding which image block and thus relation to follow, a threshold of "50" may be used such that only image blocks 660-3 to 660-5 are to be used. As it will be understood by the skilled person, the illustration of FIG. 6H represents an example only.

Turning back to FIG. 3, navigation information to the destination location according to the virtual path generated in block 340 is generated and output. In one example, the navigation information may be output by displaying, on a display device, the at least one image and the navigation information.

In the method of FIG. 3, the at least one image received from the camera may be stored in a memory device. The image may be used as sample or training data in a method for updating the model data. The method may be similar to generating the model data according to block 310, as will be described below. That is, the at least one image is used in performing machine learning operations to generate updated model data of the facility.

FIG. 4C illustrates an example for generating the model data according to block 310 of the method of FIG. 3.

As described above, the method of FIG. 3 and the subject disclosure is based on the model data and uses the model data in navigating in the facility. The model data thus forms the data basis for the method of FIG. 3. As it is commonly known in the field of ML algorithms, the generation of the model data of the facility concerns building a mathematical model based on sample data or training data.

The generating in block 310 of FIG. 3 starts with acquiring a plurality of images from inside the facility at block 480. The images which form the sample or training data are acquired using a camera. For example, the camera may be moved to a plurality of locations within the facility. At each location, one or more images may be taken by the camera from the surrounding of the location (i.e., the physical space around the location). Since normal facilities such as airport terminals comprise a plurality of different objects such as pillars, doors, seats, desks, etc., the objects in the surrounding of the location are also imaged and are thereby included in the images. For example, at each location, four images may be acquired by the camera, one in each direction North, East, South and West. The number of images at the location is not limited to four and also one image having a panoramic or wide-angle characteristic (i.e., 360 degree) may be acquired. Additional information such as the location (i.e., a coordinate of a coordinate system applied to the facility), lighting conditions, direction, camera settings such as zoom factor, aperture, etc. may be associated with the images at the location. Such additional information is also referred to as metadata of images and may be stored in the Exchangeable Image File Format (Exif). The format of the images may be JPEG format, or any other suitable format, and the images may be stored on a storage device connected to the camera. In one specific example, the plurality of images may also be represented by frames of a video stream acquired by a video camera.

The following processing is performed for each of the plurality of images sequentially, in parallel, batch-wise, location-wise, or in any other suitable fashion. The processing is performed by a computer system receiving the plurality of images from the camera or retrieving the plurality of images from a storage device.

At block 482, depth information is determined. The depth information specifying distances from the location to the objects. In effect, since images are two-dimensional representation of the physical space around the location, the depth information representing the information of the third dimension. The depth information may be determined by a sensor associated with the camera, or by applying techniques such as stereo triangulation or time-of-flight. Also, the depth information may be determined using ML techniques based on the image (i.e., the image data) and image information provided by the camera, such as the metadata described above. The depth information may be determined for each individual pixel or groups of pixels of the image.

At block 484, location information is generated based on the location from which the image was acquired. As described above, the additional information such as the metadata associated with the image includes information on the location such that the location information may correspond to or derived from the information on the location in the additional information. The location information may be represented by coordinates of a coordinate system applied to the facility, or relative to an adjacent or reference location. For example, the location information includes information that the location is five meters in the North direction and two meters in the East direction away from the reference location. It will be understood by the skilled person that any suitable representation of the location information can be used as far as the location is identified in the facility uniquely.

At block 486, the image is divided into one or more image blocks. The image blocks are non-overlapping and contiguous (directly adjacent to each other). An example of dividing the image is illustrated in FIG. 5. The image may be divided into one image block only. That is, the whole image is taken as the image block. The image may also be divided into 2 x 2, 4 x 4, or in general n x n (n being an integer number), image blocks, all having the same size. Dividing the image is however not limited to the example of FIG. 5 and the image may be divided into m x n (m, n being integer numbers) image blocks not having the same size. For example, the image may be divided such that image blocks at the edge of the image are larger than image blocks closer to the center of the image. In block 486, the image may also be divided several times with different numbers or sizes of image blocks (e.g., 2 x 2 and also 4 x 4).

At block 488, objects of the facility are detected in the one or more image blocks. More specifically, the detecting in block 488 is performed in each image block. For example, as it will be understood by the skilled person, ML techniques may be used to detect objects in the image blocks. Also other techniques for detecting objects are apparent to the skilled person. The detecting results in object information describing features and characteristics of the detected objects. For example, object information may include information of a histogram, color, size, texture, etc. of the object. Also, the object information includes information indicating the image block of the image (e.g., an identifier for the image block).

At block 490, a distance between detected objects and the location is determined. In determining, the depth information determined in block 482 is used. For example, the distance between the detected objects can be derived based on the distance of the detected object from the location by e.g. using triangulation or ML techniques. In one example, the distance between the objects and the location may also be measured. For each detected object or each image block, distance information is generated based on the determined distance.

A distance between detected objects in image blocks and a relative direction is calculated at block 492. For example, the distance between objects in image blocks may be calculated based on the depth information and/or the distance information. The relative direction describes how to navigate from one detected object in a first image block to another detected object in a second image block. For example, the distance may be five meters and the relative direction may be Northeast in order to describe that it is to be navigated from a first object to the Northeast and moved five meters to arrive at the second object. In one example, the distance and the relative direction form a first relationship based on which first relationship information is generated. Additionally, the first relationship information may indicate the image blocks including the detected objects (e.g., using identifiers of the image blocks). First relationships between image blocks are illustrated in FIG. 7A. For example, the first relationship between the image block T11 and the image block T12 of tile 1 is R1. Similarly, the first relationship between the image block T13 and the image block T14 of tile 1 is R3.

Moreover, at block 494, a distance between locations is determined. In order to describe a relationship (referred to as a second relationship) between a location from which a first image was acquired and another location from which a second image was acquired, the distance therebetween as well as a relative direction is determined. The determining is based on the respective location information of the images (e.g., the first and second image). Similar to the above described relative direction, also the relative direction with respect to the locations from which the images were acquired describes how to navigate from the location from which the first image was acquired to the location from which the second image was acquired. For example, the distance may be 50 meters and the relative direction may be North in order to describe that it is to be navigated from the location from which the first image was acquired to the North and moved 50 meters to arrive at the location from which the second image was acquired. In one example, the distance and the relative direction are used to generate second relationship information. Additionally, the second relationship information may indicate the images and/or the location (e.g., using identifiers of the images or coordinates of the locations). Second relationships between images are illustrated in FIG. 7B. For example, the second relationship between tile 1 (a first image) and tile 2 (a second image) is R12. Similarly, the second relationship between tile 3 (a first image) and tile 4 (a second image) is R34.

At block 496, image data of the image is generated. The image data at least include the location information, the object information, the first relationship information and the second relationship information.

Performing the steps of the blocks 482 to 496 for a plurality of sample or training images acquired in block 480 and generating image data for each image generates the model data. The model data forming the model of the facility.

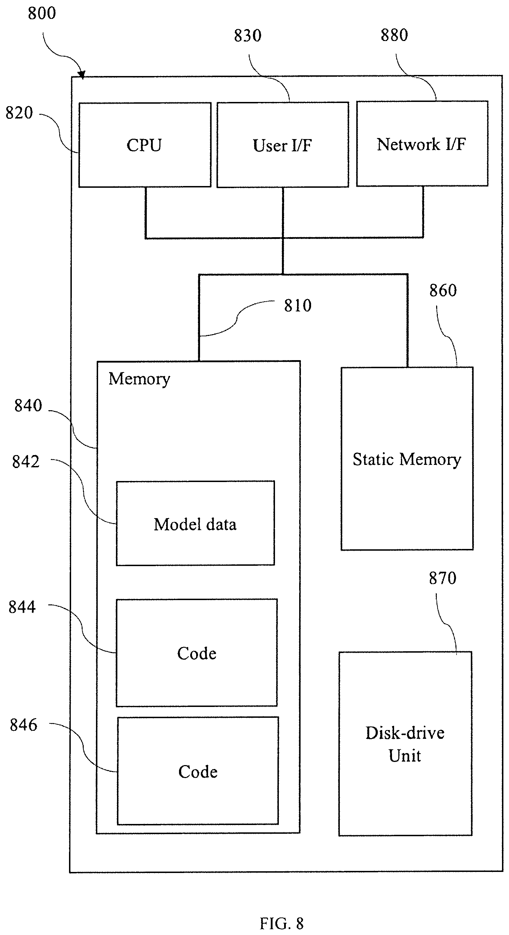

Finally, FIG. 8 is a diagrammatic representation of a computer system which provides the functionality of the computing system for use in navigating in a facility as shown in FIG 2. Within the computer system 800 a set of instructions, to cause the computer system to perform any of the methodologies discussed herein, may be executed. The computer system 800 includes at least one processor 820, a main memory 840 and a network interface device 880, which communicate with each other via a bus 810. Optionally, it may further include a static memory 860 and a disk-drive unit 870. A video display, an alpha-numeric input device and a cursor control device may be provided as examples of user interface 830. The network interface device 880 connects the computer system 800 to the clients or devices equipped with a camera, a display, and input means, the Internet and/or any other network. The clients or devices are used e.g. by users in navigating in a facility. Also, the model data 842 and images (e.g., sample or training images; images received from the clients or devices) 844 may be stored within the main memory 840. A set of computer-executable instructions (i.e., computer program code) 846 embodying any one, or all, of the methodologies described above, resides completely, or at least partially, in or on a machine-readable medium, e.g., the main memory 840 and/or the at least one processor 820. A machine-readable medium on which the code 844 resides may also be a non-volatile data carrier (e.g., a non-removable magnetic hard disk or an optical or magnetic removable disk) which is part of disk drive unit 870. The code 846 may further be transmitted or received as a propagated signal via the Internet through the network interface device 880. Basic operation of the computer system 800 including user interface and network communication is controlled by an operating system (not shown).

In general, the routines executed to implement examples of the subject disclosure, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the examples of the subject disclosure. Computer-readable program instructions for carrying out operations of the examples of the subject disclosure may be, for example, assembly language or either source code or object code written in any combination of one or more programming languages.

Various program code described herein may be identified based upon the application within that it is implemented in specific examples of the subject disclosure. However, it should be appreciated that any particular program nomenclature that follows is used merely for convenience, and thus the subject disclosure should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the examples of the subject disclosure are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the examples of the subject disclosure.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative examples, the functions, acts, and/or operations specified in the flow charts, sequence diagrams, and/or block diagrams may be re-ordered, processed serially, and/or processed concurrently consistent with examples of the subject disclosure. Moreover, any of the flow charts, sequence diagrams, and/or block diagrams may include more or fewer blocks than those illustrated consistent with examples of the subject disclosure.

The terminology used herein is for the purpose of describing particular examples only and is not intended to be limiting of the examples of the subject disclosure. It will be further understood that the terms "comprises" and/or "comprising," when used in this subject disclosure, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used, such terms are intended to be inclusive in a manner similar to the term "comprising".

## Claims

1. A computer-implemented method (300) for use in navigating in a facility, comprising:
- receiving, from a camera, at least one image (320);
- estimating, by a processor, a current location of the camera in the facility based on the at least one image and model data of the facility (330);
- generating, by the processor, a virtual path from the current location of the camera to a destination location in the facility using the model data of the facility (340); and
- generating and outputting navigation information to the destination location according to the virtual path (350),
**characterized in that** the model data of the facility comprises image data of a plurality of images, the image data of each image comprising location information corresponding to a location in the facility from which the image was acquired; object information corresponding to an object of the facility in the image; distance information corresponding to a distance between the object and the location; first relationship information specifying, as a first relationship, a distance and a relative direction to navigate from one object to another object of the image; and second relationship information specifying, as a second relationship, a distance and a relative direction to navigate from the location from which the image was acquired to a location from which another image was acquired,
and **in that** estimating the current location (330) comprises:
- dividing, by the processor, the at least one image into one or more image blocks (420);
- detecting, by the processor in the one or more image blocks, object candidates corresponding to objects of the facility based on the object information from the model data of the facility (422);
- determining, by the processor, distance values to the detected object candidates based on the object information and the distance information of the corresponding object from the model data of the facility (424);
- determining, by the processor a distance between object candidates based on the distance values (426); and
- estimating, by the processor, the current location of the camera based on the location information from the model data of the facility and the distance values to the detected object candidates (430), and
**in that** the virtual path corresponds to a sequence of steps to move from the object candidates at the current location to an object in the vicinity of the destination location based on the first and the second relationship information.

2. The computer-implemented method (300) of claim 1, wherein estimating the current location (330) further comprises:
- performing, by the processor, object classification with respect to the object candidates of the image based on the distance values and the distance to detect the objects of the facility (428).

3. The computer-implemented method (300) of any of claims 1 and 2, further comprising:
- receiving, via an input device, information about a destination object in the facility to which the camera is to be navigated (325);
- searching, by the processor in the model data, for at least one image block of an image, the object information in the model data of the facility corresponding to the information about the destination object;
- estimating, by the processor as the destination location, a location of the destination object based on image data of images comprising the destination object.

4. The computer-implemented method (300) of any of claims 1 to 3, wherein generating a virtual path (340) comprises:
- determining, by the processor, a relation between the object candidates in the image blocks of the image and the destination object based on the first and second relationship information in the model data of the facility (440); and
- deriving, by the processor, the virtual path based on the determined relation (442).

5. The computer-implemented method (300) of any of claims 1 to 4, wherein outputting the navigation information (350) comprises displaying, on a display, the at least one image and the navigation information.

6. The computer-implemented method (300) of any of claims 1 to 5, further comprising generating, by the processor, the model data of the facility (310), comprising:
- acquiring, by the camera from a plurality of locations within the facility, one or more images (480);
- for each of the plurality of images, determining, by the processor, depth information based on the image and image information provided by the camera (482); generating, by the processor, location information based on the location from which the image was acquired (484); dividing, by the processor, the image into one or more image blocks (486); detecting, by the processor, objects of the facility in the one or more image blocks and generating object information defining features of the detected objects, the object information including information indicating the image block of the image (488); determining, by the processor, a distance between detected objects in the one or more image blocks and the location using the depth information and generating distance information corresponding to the detected object in an image block (490); calculating, by the processor, a distance between detected objects in the one or more image blocks and a relative direction describing how to navigate from one object in a first image block to another object in a second image block, and generating first relationship information based on the distance and the relative direction, the first relationship information including information indicating the first and second image blocks of the image (492); determining, by the processor, a distance between the location from which the image was acquired and another location from which another image was acquired based on the location information of the image and the another image, and a relative direction describing how to navigate from the location to the other location, and generating second relationship information based on the distance and the relative direction, the second relationship information including information indicating the image and the other image (494); and generating, by the processor, image data of the image, including the location information, the object information, the first relationship information and the second relationship information (496).

7. The computer-implemented method (300) of any of claims 1 to 6, further comprising:
- storing, by the processor, the at least one image;
- performing, by the processor, machine learning operations using the at least one image and the model data of the facility to generate updated model data of the facility.

8. A computing system (100, 800) for use in navigating in a facility, comprising:
- a processor (820);
- a camera device (112);
- at least one memory device (840) accessible by the processor (820);
- wherein the memory device (840) contains a body of program instructions (846) which, when executed by the processor (820), cause the computing system (100, 800) to implement a method comprising: receiving, from the camera device (112), at least one image; estimating a current location of the camera device (112) in the facility based on the at least one image and model data of the facility; generating a virtual path from the current location of the camera device (112) to a destination location in the facility using the model data of the facility; and generating and outputting navigation information to the destination location according to the virtual path,
**characterized in that** the model data of the facility comprises image data of a plurality of images, the image data of each image comprising location information corresponding to a location in the facility from which the image was acquired; object information corresponding to an object of the facility in the image; distance information corresponding to a distance between the object and the location; first relationship information specifying, as a first relationship, a distance and a relative direction to navigate from one object to another object of the image; and second relationship information specifying, as a second relationship, a distance and a relative direction to navigate from the location from which the image was acquired to a location from which another image was acquired,
and **in that** estimating the current location comprises:
- dividing the at least one image into one or more image blocks;
- detecting, in the one or more image blocks, object candidates corresponding to objects of the facility based on the object information from the model data of the facility;
- determining, distance values to the detected object candidates based on the object information and the distance information of the corresponding object from the model data of the facility;
- determining a distance between object candidates based on the distance values; and
- estimating the current location of the camera based on the location information from the model data of the facility and the distance values to the detected object candidates, and
**in that** the virtual path corresponds to a sequence of steps to move from the object candidates at the current location to an object in the vicinity of the destination location based on the first and the second relationship information.

9. The system (100, 800) of claim 8, further being arranged to perform the method of any one of claims 2 to 7.

10. A computer program product comprising program code instructions stored on a computer readable medium to execute the method steps according to any one of the claims 1 to 7 when said program is executed on a computer.

## Patentansprüche

1. Computer-implementiertes Verfahren (300) zur Verwendung beim Navigieren in einer Einrichtung, umfassend:
- Empfangen mindestens eines Bildes (320) von einer Kamera;
- Schätzen, durch einen Prozessor, eines aktuellen Ortes der Kamera in der Einrichtung auf der Grundlage des mindestens einen Bildes und von Modelldaten der Einrichtung (330);
- Erzeugen, durch den Prozessor, eines virtuellen Pfades von dem aktuellen Ort der Kamera zu einem Zielort in der Einrichtung unter Verwendung der Modelldaten der Einrichtung (340); und
- Erzeugen und Ausgeben von Navigationsinformation zu dem Zielort gemäß dem virtuellen Pfad (350),
**dadurch gekennzeichnet, dass** die Modelldaten der Einrichtung Bilddaten einer Vielzahl von Bildern umfassen, wobei die Bilddaten jedes Bildes umfassen: Ortsinformation, die einem Ort in der Einrichtung entspricht, von dem das Bild aufgenommen wurde; Objektinformation, die einem Objekt der Einrichtung in dem Bild entspricht; Entfernungsinformation, die einer Entfernung zwischen dem Objekt und dem Ort entspricht; erste Beziehungsinformation, die als eine erste Beziehung eine Entfernung und eine relative Richtung spezifiziert, um von einem Objekt zu einem anderen Objekt des Bildes zu navigieren; und zweite Beziehungsinformation, die als eine zweite Beziehung eine Entfernung und eine relative Richtung spezifiziert, um von dem Ort, von dem das Bild aufgenommen wurde, zu einem Ort zu navigieren, von dem ein anderes Bild aufgenommen wurde,
und dadurch, dass Schätzen des aktuellen Ortes (330) umfasst:
- Aufteilen, durch den Prozessor, des mindestens einen Bildes in einen oder mehrere Bildblöcke (420);
- Erfassen, durch den Prozessor in dem einen oder den mehreren Bildblöcken, von Objektkandidaten, die Objekten der Einrichtung entsprechen, auf der Grundlage der Objektinformation aus den Modelldaten der Einrichtung (422);
- Bestimmen, durch den Prozessor, von Entfernungswerten zu den erfassten Objektkandidaten auf der Grundlage der Objektinformation und der Entfernungsinformation des entsprechenden Objekts aus den Modelldaten der Einrichtung (424);
- Bestimmen, durch den Prozessor, einer Entfernung zwischen Objektkandidaten auf der Grundlage der Entfernungswerte (426); und
- Schätzen, durch den Prozessor, des aktuellen Ortes der Kamera auf der Grundlage der Ortsinformation aus den Modelldaten der Einrichtung und den Entfernungswerten zu den erfassten Objektkandidaten (430), und
dadurch, dass der virtuelle Pfad einer Folge von Schritten zum Bewegen von den Objektkandidaten am aktuellen Ort zu einem Objekt in der Nähe des Zielortes auf der Grundlage der ersten und der zweiten Beziehungsinformation entspricht.

2. Computer-implementiertes Verfahren (300) nach Anspruch 1, wobei Schätzen des aktuellen Ortes (330) ferner umfasst:
- Durchführen, durch den Prozessor, einer Objektklassifizierung in Bezug auf die Objektkandidaten des Bildes auf der Grundlage der Entfernungswerte und der Entfernung, um die Objekte der Einrichtung zu erfassen (428).

3. Computer-implementiertes Verfahren (300) nach einem der Ansprüche 1 und 2, ferner umfassend:
- Empfangen, über eine Eingabevorrichtung, von Information über ein Zielobjekt in der Einrichtung, zu dem die Kamera navigiert werden soll (325);
- Suchen, durch den Prozessor in den Modelldaten für mindestens einen Bildblock eines Bildes, der Objektinformation in den Modelldaten der Einrichtung, die der Information über das Zielobjekt entspricht;
- Schätzen, durch den Prozessor als den Zielort, eines Ortes des Zielobjekts auf der Grundlage von Bilddaten von Bildern, die das Zielobjekt umfassen.

4. Computer-implementiertes Verfahren (300) nach einem der Ansprüche 1 bis 3, wobei Erzeugen eines virtuellen Pfades (340) umfasst:
- Bestimmen, durch den Prozessor, einer Beziehung zwischen den Objektkandidaten in den Bildblöcken des Bildes und dem Zielobjekt auf der Grundlage der ersten und zweiten Beziehungsinformation in den Modelldaten der Einrichtung (440); und
- Ableiten, durch den Prozessor, des virtuellen Pfades auf der Grundlage der bestimmten Beziehung (442).

5. Computer-implementiertes Verfahren (300) nach einem der Ansprüche 1 bis 4, wobei Ausgeben der Navigationsinformation (350) Anzeigen, auf einer Anzeige, des mindestens einen Bildes und der Navigationsinformation umfasst.

6. Computer-implementiertes Verfahren (300) nach einem der Ansprüche 1 bis 5, ferner umfassend Erzeugen, durch den Prozessor, der Modelldaten der Einrichtung (310), umfassend:
- Aufnehmen, durch die Kamera von einer Vielzahl von Orten innerhalb der Einrichtung, eines oder mehrerer Bilder (480);
- Bestimmen, durch den Prozessor, von Tiefeninformation für jedes der Vielzahl von Bildern auf der Grundlage des Bildes und von Bildinformation, die durch die Kamera geliefert wird (482); Erzeugen, durch den Prozessor, von Ortsinformation auf der Grundlage des Ortes, von dem aus das Bild aufgenommen wurde (484); Aufteilen, durch den Prozessor, des Bildes in einen oder mehrere Bildblöcke (486); Erfassen, durch den Prozessor, von Objekten der Einrichtung in dem einen oder den mehreren Bildblöcken und Erzeugen von Objektinformation, die Merkmale der erfassten Objekte definieren, wobei die Objektinformation Information enthält, die den Bildblock des Bildes angeben (488); Bestimmen, durch den Prozessor, einer Entfernung zwischen erfassten Objekten in dem einen oder den mehreren Bildblöcken und dem Ort unter Verwendung der Tiefeninformation und Erzeugen von Entfernungsinformation, die dem erfassten Objekt in einem Bildblock entsprechen (490); Berechnen, durch den Prozessor, einer Entfernung zwischen erfassten Objekten in dem einen oder den mehreren Bildblöcken und einer relativen Richtung, die beschreibt, wie von einem Objekt in einem ersten Bildblock zu einem anderen Objekt in einem zweiten Bildblock zu navigieren ist, und Erzeugen erster Beziehungsinformation auf der Grundlage der Entfernung und der relativen Richtung, wobei die erste Beziehungsinformation Information enthält, die den ersten und den zweiten Bildblock des Bildes angibt (492); Bestimmen, durch den Prozessor, einer Entfernung zwischen dem Ort, von dem das Bild aufgenommen wurde, und einem anderen Ort, von dem ein anderes Bild aufgenommen wurde, auf der Grundlage der Ortsinformation des Bildes und des anderen Bildes, und einer relativen Richtung, die beschreibt, wie von dem Ort zu dem anderen Ort zu navigieren ist, und Erzeugen zweiter Beziehungsinformation auf der Grundlage der Entfernung und der relativen Richtung, wobei die zweiten Beziehungsinformation Information enthält, die das Bild und das andere Bild angibt (494); und Erzeugen, durch den Prozessor, von Bilddaten des Bildes, die die Ortsinformation, die Objektinformation, die erste Beziehungsinformation und die zweite Beziehungsinformation enthält (496).

7. Computerimplementiertes Verfahren (300) nach einem der Ansprüche 1 bis 6, ferner umfassend:
- Speichern, durch den Prozessor, des mindestens einen Bildes;
- Durchführen, durch den Prozessor, von maschinellen Lernoperationen unter Verwendung des mindestens einen Bildes und der Modelldaten der Einrichtung, um aktualisierte Modelldaten der Einrichtung zu erzeugen.

8. Computersystem (100, 800) zur Verwendung beim Navigieren in einer Einrichtung, umfassend:
- einen Prozessor (820);
- eine Kameravorrichtung (112);
- mindestens eine Speichervorrichtung (840), auf die der Prozessor (820) zugreifen kann;
- wobei die Speichervorrichtung (840) einen Hauptteil von Programmanweisungen (846) enthält, die, wenn sie von dem Prozessor (820) ausgeführt werden, das Computersystem (100, 800) dazu veranlassen, ein Verfahren zu implementieren, umfassend: Empfangen, von der Kameravorrichtung (112), mindestens eines Bildes; Schätzen eines aktuellen Ortes der Kameravorrichtung (112) in der Einrichtung auf der Grundlage des mindestens einen Bildes und von Modelldaten der Einrichtung; Erzeugen eines virtuellen Pfades von dem aktuellen Ort der Kameravorrichtung (112) zu einem Zielort in der Einrichtung unter Verwendung der Modelldaten der Einrichtung; und Erzeugen und Ausgeben von Navigationsinformation zu dem Zielort gemäß dem virtuellen Pfad,
**dadurch gekennzeichnet, dass** die Modelldaten der Einrichtung Bilddaten einer Vielzahl von Bildern umfassen, wobei die Bilddaten jedes Bildes umfassen: Ortsinformation, die einem Ort in der Einrichtung entspricht, von dem das Bild aufgenommen wurde; Objektinformation, die einem Objekt der Einrichtung in dem Bild entspricht; Entfernungsinformation, die einer Entfernung zwischen dem Objekt und dem Ort entspricht; erste Beziehungsinformation, die als eine erste Beziehung eine Entfernung und eine relative Richtung spezifiziert, um von einem Objekt zu einem anderen Objekt des Bildes zu navigieren; und zweite Beziehungsinformation, die als eine zweite Beziehung eine Entfernung und eine relative Richtung spezifiziert, um von dem Ort, von dem das Bild aufgenommen wurde, zu einem Ort zu navigieren, von dem ein anderes Bild aufgenommen wurde,
und dadurch, dass Schätzen des aktuellen Ortes (330) umfasst:
- Aufteilen des mindestens einen Bildes in einen oder mehrere Bildblöcke;
- Erfassen, in dem einen oder den mehreren Bildblöcken, von Objektkandidaten, die Objekten der Einrichtung entsprechen, auf der Grundlage der Objektinformation aus den Modelldaten der Einrichtung;
- Bestimmen von Entfernungswerten zu den erfassten Objektkandidaten auf der Grundlage der Objektinformation und der Entfernungsinformation des entsprechenden Objekts aus den Modelldaten der Einrichtung;
- Bestimmen einer Entfernung zwischen Objektkandidaten auf der Grundlage der Entfernungswerte; und
- Schätzen des aktuellen Ortes der Kamera auf der Grundlage der Ortsinformation aus den Modelldaten der Einrichtung und den Entfernungswerten zu den erfassten Objektkandidaten, und
dadurch, dass der virtuelle Pfad einer Folge von Schritten zum Bewegen von den Objektkandidaten am aktuellen Ort zu einem Objekt in der Nähe des Zielortes auf der Grundlage der ersten und der zweiten Beziehungsinformation entspricht.

9. System (100, 800) nach Anspruch 8, das ferner dazu eingerichtet ist, das Verfahren nach einem der Ansprüche 2 bis 7 durchzuführen.

10. Computerprogrammprodukt mit Programmcodeanweisungen, die auf einem computerlesbaren Medium gespeichert sind, um die Verfahrensschritte nach einem der Ansprüche 1 bis 7 auszuführen, wenn das Programm auf einem Computer ausgeführt wird.

## Revendications

1. Méthode (300) mise en œuvre par ordinateur pour son utilisation dans la circulation au sein d'une installation, comprenant :
- la réception, à partir d'une caméra, d'au moins une image (320) ;
- l'estimation, par un processeur, d'un emplacement courant de la caméra dans l'installation sur la base de l'au moins une image et de données de modèle de l'installation (330) ;
- la génération, par le processeur, d'un chemin virtuel de l'emplacement courant de la caméra à un emplacement de destination dans l'installation à l'aide des données de modèle de l'installation (340) ; et
- la génération et la sortie d'informations de circulation vers l'emplacement de destination selon le chemin virtuel (350),
**caractérisée en ce que**
les données de modèle de l'installation comprennent des données d'image d'une pluralité d'images, les données d'image de chaque image comprenant des informations d'emplacement correspondant à un emplacement dans l'installation duquel l'image a été acquise ; des informations d'objet correspondant à un objet de l'installation dans l'image ; des informations de distance correspondant à une distance entre l'objet et l'emplacement ; des premières informations de relation spécifiant, en tant que première relation, une distance et une direction relative pour se déplacer d'un objet à un autre objet de l'image ; et des secondes informations de relation spécifiant, en tant que seconde relation, une distance et une direction relative pour se déplacer de l'emplacement duquel l'image a été acquise à un emplacement duquel une autre image a été acquise,
et **en ce que** l'estimation de l'emplacement courant (330) comprend :
- la division, par le processeur, de l'au moins une image en un ou plusieurs blocs d'images (420) ;
- la détection, par le processeur dans les un ou plusieurs blocs d'images, d'objets candidats correspondant à des objets de l'installation sur la base des informations d'objet à partir des données de modèle de l'installation (422) ;
- la détermination, par le processeur, de valeurs de distance aux objets candidats détectés sur la base des informations d'objet et des informations de distance de l'objet correspondant à partir des données de modèle de l'installation (424) ;
- la détermination, par le processeur, d'une distance entre des objets candidats sur la base des valeurs de distance (426) ; et
- l'estimation, par le processeur, de l'emplacement courant de la caméra sur la base des informations d'emplacement à partir des données de modèle de l'installation et des valeurs de distance aux objets candidats détectés (430), et
**en ce que** le chemin virtuel correspond à une séquence d'étapes permettant de se déplacer des candidats d'objet à l'emplacement courant à un objet à proximité de l'emplacement de destination sur la base des premières et secondes informations de relation.

2. Méthode (300) mise en œuvre par ordinateur selon la revendication 1, dans laquelle l'estimation de l'emplacement courant (330) comprend en outre :
- la réalisation, par le processeur, d'une classification d'objet par rapport aux objets candidats de l'image sur la base des valeurs de distance et de la distance pour détecter les objets de l'installation (428).

3. Méthode (300) mise en œuvre par ordinateur selon l'une quelconque des revendications 1 et 2, comprenant en outre :
- la réception, par l'intermédiaire d'un dispositif d'entrée, d'informations sur un objet de destination dans l'installation vers lequel la caméra doit être déplacée (325) ;
- la recherche, par le processeur dans les données de modèle, d'au moins un bloc d'image d'une image, des informations d'objet dans les données de modèle de l'installation correspondant aux informations sur l'objet de destination ;
- l'estimation, par le processeur en tant qu'emplacement de destination, d'un emplacement de l'objet de destination sur la base de données d'image d'images comprenant l'objet de destination.

4. Méthode (300) mise en œuvre par ordinateur selon l'une quelconque des revendications 1 à 3, dans laquelle la génération d'un chemin virtuel (340) comprend :
- la détermination, par le processeur, d'une relation entre les objets candidats dans les blocs d'image de l'image et l'objet de destination sur la base des premières et secondes informations de relation dans les données de modèle de l'installation (440) ; et
- la déduction, par le processeur, du chemin virtuel sur la base de la relation déterminée (442).

5. Méthode (300) mise en œuvre par ordinateur selon l'une quelconque des revendications 1 à 4, dans laquelle la sortie des informations de circulation (350) comprend l'affichage, sur un écran, de l'au moins une image et des informations de circulation.

6. Méthode (300) mise en œuvre par ordinateur selon l'une quelconque des revendications 1 à 5, comprenant en outre la génération, par le processeur, des données de modèle de l'installation (310), comprenant :
- l'acquisition, par la caméra à partir d'une pluralité d'emplacements au sein de l'installation, d'une ou plusieurs images (480) ;
- pour chacune de la pluralité d'images, la détermination, par le processeur, d'informations de profondeur sur la base de l'image et d'informations d'image fournies par la caméra (482) ; la génération, par le processeur, des informations d'emplacement sur la base de l'emplacement duquel l'image a été acquise (484) ; la division, par le processeur, de l'image en un ou plusieurs blocs d'images (486) ; la détection, par le processeur, d'objets de l'installation dans les un ou plusieurs blocs d'images et la génération d'informations d'objet définissant des caractéristiques d'objets détectés, les informations d'objet incluant des informations indiquant le bloc d'image de l'image (488) ; la détermination, par le processeur, d'une distance entre des objets détectés dans les un ou plusieurs blocs d'images et l'emplacement à l'aide des informations de profondeur et la génération d'informations de distance correspondant à l'objet détecté dans un bloc d'image (490) ; le calcul, par le processeur, d'une distance entre des objets détectés dans les un ou plusieurs blocs d'images et une direction relative décrivant comment se déplacer d'un objet dans un premier bloc d'images à un autre objet dans un second bloc d'images, et la génération de premières informations de relation sur la base de la distance et de la direction relative, les premières informations de relation incluant des informations indiquant les premier et second blocs d'images de l'image (492) ; la détermination, par le processeur, d'une distance entre l'emplacement duquel l'image a été acquise et un autre emplacement duquel une autre image a été acquise sur la base des informations d'emplacement de l'image et de l'autre image, et d'une direction relative décrivant comment se déplacer de l'emplacement à l'autre emplacement, et la génération de secondes informations de relation sur la base de la distance et de la direction relative, les secondes informations de relation incluant des informations indiquant l'image et l'autre image (494) ; et la génération, par le processeur, de données d'image de l'image, incluant les informations d'emplacement, les informations d'objet, les premières informations de relation et les secondes informations de relation (496).

7. Méthode (300) mise en œuvre par ordinateur selon l'une quelconque des revendications 1 à 6, comprenant en outre :
- le stockage, par le processeur, de l'au moins une image ;
- la réalisation, par le processeur, d'opérations d'apprentissage automatique à l'aide de l'au moins une image et des données de modèle de l'installation pour générer des données de modèle mises à jour de l'installation.

8. Système informatique (100, 800) pour son utilisation dans la circulation au sein d'une installation, comprenant :
- un processeur (820) ;
- un dispositif caméra (112) ;
- au moins un dispositif mémoire (840) accessible par le processeur (820) ;
- dans lequel le dispositif mémoire (840) contient un corps d'instructions de programme (846) qui, lorsqu'elles sont exécutées par le processeur (820), amènent le système informatique (100, 800) à mettre en œuvre une méthode comprenant : la réception, à partir du dispositif caméra (112), d'au moins une image ; l'estimation d'un emplacement courant du dispositif caméra (112) dans l'installation sur la base de l'au moins une image et des données de modèle de l'installation ; la génération d'un chemin virtuel de l'emplacement courant du dispositif caméra (112) à un emplacement de destination dans l'installation à l'aide des données de modèle de l'installation ; et la génération et la sortie d'informations de circulation vers l'emplacement de destination selon le chemin virtuel,
**caractérisé en ce que**
les données de modèle de l'installation comprennent des données d'image d'une pluralité d'images, les données d'image de chaque image comprenant des informations d'emplacement correspondant à un emplacement dans l'installation duquel l'image a été acquise ; des informations d'objet correspondant à un objet de l'installation dans l'image ; des informations de distance correspondant à une distance entre l'objet et l'emplacement ; des premières informations de relation spécifiant, en tant que première relation, une distance et une direction relative pour se déplacer d'un objet à un autre objet de l'image ; et des secondes informations de relation spécifiant, en tant que seconde relation, une distance et une direction relative pour se déplacer de l'emplacement duquel l'image a été acquise à un emplacement duquel une autre image a été acquise,
et **en ce que** l'estimation de l'emplacement courant comprend :
- la division de l'au moins une image en un ou plusieurs blocs d'images ;
- la détection, dans les un ou plusieurs blocs d'images, d'objets candidats correspondant à des objets de l'installation sur la base des informations d'objet à partir des données de modèle de l'installation ;
- la détermination de valeurs de distance par rapport aux objets candidats détectés sur la base des informations d'objet et des informations de distance de l'objet correspondant à partir des données de modèle de l'installation ;
- la détermination d'une distance entre des objets candidats sur la base des valeurs de distance ; et
- l'estimation de l'emplacement courant de la caméra sur la base des informations d'emplacement à partir des données de modèle de l'installation et des valeurs de distance aux objets candidats détectés, et
**en ce que** le chemin virtuel correspond à une séquence d'étapes pour se déplacer des candidats d'objet à l'emplacement courant à un objet à proximité de l'emplacement de destination sur la base des premières et secondes informations de relation.

9. Système (100, 800) selon la revendication 8, en outre conçu pour réaliser la méthode selon l'une quelconque des revendications 2 à 7.

10. Produit-programme d'ordinateur comprenant des instructions de code de programme stockées sur un support lisible par ordinateur pour exécuter les étapes de méthode selon l'une quelconque des revendications 1 à 7, lorsque ledit programme est exécuté sur un ordinateur.
